# EUROPEAN PATENT SPECIFICATION

(11) **EP 3 900 547 B1**
(45) Date of publication and mention of the grant of the patent: **10.09.2025**
(21) Application number: 19900342.7
(22) Date of filing: 18.12.2019
(51) Int. Cl.: A23L 5/10, A23L 7/157

(54) **DUSTING FLOUR MIX FOR FRIED FOOD**
MEHLMISCHUNG ZUM BESTÄUBEN VON FRITTIERTEN SPEISEN
MÉLANGE DE FARINE POUR ALIMENTS FRITS

(30) Priority: 18.12.2018 JP 2018236368
(43) Date of publication of application: 27.10.2021
(73) Proprietor: Nisshin Seifun Welna Inc., Tokyo 101-8441 (JP)
(72) Inventor: TSUJI, Akito, Tokyo 101-8441 (JP); TAGAMI, Yuji, Tokyo 101-8441 (JP); YAGISHITA, Takahiro, Tokyo 103-8544 (JP); ITO, Takashi, Tokyo 103-8544 (JP)
(74) Representative: Wächtershäuser & Hartz Patentanwaltspartnerschaft mbB
(86) International application number: PCT/JP2019/049541
(87) International publication number: WO 2020/130018

(56) References cited:
- WO-A1-2017/030081
- WO-A1-2018/008710
- WO-A1-2018/008710
- JP-A- 2005 185 122
- JP-A- 2006 230 268
- JP-A- 2007 061 039
- JP-A- 2007 143 513
- SAJILATA M G ET AL: "Specialty starches for snack foods", CARBOHYDRATE POLYMERS, APPLIED SCIENCE PUBLISHERS , LTD BARKING, GB, vol. 59, no. 2, 10 January 2005 (2005-01-10), pages 131 - 151, XP027721586, ISSN: 0144-8617, [retrieved on 20050110]
- ANONYMOUS: "Characteristics of fat-processed starch and application technology", 8 July 2011 (2011-07-08), pages 1 - 4, XP055720647, Retrieved from the Internet <URL:https://www.alic.go.jp/joho-d/joho08_000083.html>

## Description

### Technical Field

The present invention relates to a dusting flour mix for fried food.

### Background Art

Coating materials for fried food are roughly classified into two materials: breader, a powder coating material; and batter, a liquid coating material. In a fried food made by using either coating material, a food ingredient is heated without direct contact with frying oil because of a coating formed from the coating material to make it juicy, while moisture in the coating due to frying oil is evaporated to obtain the coating having a crispy and dry texture.

Fried foods have a problem in which the coating falls off the food ingredients during heat cooking or after cooking because of shrinkage or deformation of the food ingredients under heating. To address this problem, a conventional method involves previously sprinkling food ingredients with a dusting flour to improve the adhesion between the food ingredients and a coating material and then adhering the coating material to the food ingredients before cooking. However, when the coating material adheres to the food ingredients, the moisture of the food ingredients easily transfers to the coating, which makes it easy to lose the crispy texture of the coating with time after cooking. This tendency is noticeable after storage of fried foods at a low temperature.

With regard to dusting flours for fried food, Patent Literature 1 discloses that an oil-and-fat-modified starch is used as a dusting flour in order to improve the adherence between food ingredients and a coating material. Patent Literature 2 discloses that a fried food made by using a dusting flour containing fructan such as inulin has a crispy texture of a coating even after elapse of time after frying. Patent Literature 3 discloses that a fried food made by using a dusting flour containing a non-pregelatinized cereal flour as a main component and fructan or trehalose and having a predetermined protein content and a predetermined starch content has a crisp texture even after elapse of time after frying.

### Citation List

### Patent Literature

Patent Literature 1: JP 2016-174535 A
Patent Literature 2: JP 2006-230268 A
Patent Literature 3: JP 2007-143513 A
WO 2018/008710 A1 discloses a battered and fried food production method in which an ingredient is deep-fried after having flour and a batter material sequentially applied thereto.

### Summary of Invention

### Technical Problem

There is a need of a fried food that has good adherence between a food ingredient and a coating material and has a favorable texture of coating even after elapse of time after cooking.

### Solution to Problem

The inventors of the present invention found that a fried food in which a coating is unlikely to fall off because of good adherence between a food ingredient and a coating material and having a favorable crisp texture even after elapse of time after cooking can be produced by adhering a dusting flour containing inulin, an oil-and-fat-modified starch, and egg white powder to the food ingredient and then adhering the coating material to the food ingredient, followed by frying.

The present invention provides a dusting flour mix for fried food containing inulin, an oil-and-fat-modified starch, and egg white powder as further defined by claim 1.

The present invention also provides a method for producing fried food including adhering a coating material to a food ingredient having the dusting flour mix for fried food of the present invention adhering thereto, and then frying the resulting food ingredient.

The present invention also provides use of, as a dusting flour for fried food, a mix of the present invention, containing inulin, an oil-and-fat-modified starch, and egg white powder.

### Advantageous Effects of Invention

A fried food made by using the dusting flour mix for fried food of the present invention has a coating that is unlikely to fall off because of good adherence between the food ingredient and the coating material. Such a fried food has a coating with a favorable crisp texture even after elapse of time after cooking, which shows less quality degradation. The present invention can provide a fried food having a crisp coating that is unlikely to fall off, and having a favorable appearance and texture, even after elapse of time after cooking.

### Description of Embodiments

The present invention provides a dusting flour mix for fried food. A dusting flour mix for fried food of the present invention (hereinafter may also be referred simply as a mix of the present invention) is used as a dusting flour with which a food ingredient is sprinkled before a coating material is adhered to the food ingredient during production of fried food.

The mix of the present invention contains inulin. Inulin is a polymer of fructose, which has a terminal glucose. Inulin used in the mix of the present invention preferably has a degree of polymerization of fructose of 5 or more, more preferably has a degree of polymerization of fructose of 10 to 29. Examples of inulin used in the mix of the present invention include inulin extracted from inulin-containing plants, such as Chicory and Jerusalem artichoke, inulin produced by microorganisms, and inulin having a low degree of polymerization of fructose resulting from decomposition of such inulin. For example, inulin used in the mix of the present invention can be produced by the method described in JP 4278691 B2 or WO 03/027304. Alternatively, commercial inulin may be used.

In the mix of the present invention, the amount of inulin relative to the total mass of the mix is 0.5 to 30 mass%, preferably 1 to 25 mass%, more preferably 5 to 20 mass%. When an amount of inulin in the mix is too small, the coating of the produced fried food may become less crunchy or crisp. When an amount of inulin in the mix is too large, the coating of the produced fried food may easily fall off or may have a hard texture.

The mix of the present invention further contains an oil-and-fat-modified starch. Preferably, the oil-and-fat-modified starch used in the mix of the present invention is prepared by mixing 100 parts by mass of raw material starch and about 0.01 to 30 parts by mass, preferably 0.05 to 1 part by mass, of edible oil and fat and drying the resulting mixture as appropriate. As desired, the mixture may be heated before and after the mixture is dried. Alternatively, a commercial oil-and-fat-modified starch may be used. Examples of the raw material starch for the oil-and-fat-modified starch include, but are not limited to, unmodified starches, such as corn starch, waxy corn starch, tapioca starch, potato starch, wheat starch, and rice starch; and modified starches produced by subjecting those starches to pregelatinization, etherification, esterification, cross-linking, oxidation, or other treatments. These raw material starches can be used alone or in combination of two or more. Examples of edible oils and fats mixed with the raw material starch include, but are not limited to, edible vegetable and animal oils and fats, such as soybean oil, rapeseed oil, cottonseed oil, safflower oil, sunflower oil, rice oil, corn oil, palm oil, perilla oil, beef tallow, and lard. These edible oils and fats can be used alone or in combination of two or more.

In the mix of the present invention, the amount of oil-and-fat-modified starch relative to the total mass of the mix is 40 to 98 mass%, preferably 45 to 97 mass%, more preferably 50 to 90 mass%. When the amount of oil-and-fat-modified starch in the mix is 40 mass% or more, the coating of the fried food made by using the mix can be effectively prevented from falling off. When the amount of oil-and-fat-modified starch in the mix is 98 mass% or less, the coating is unlikely to have a sticky texture.

The mix of the present invention further contains egg white powder. Examples of egg white powder used in the mix of the present invention include egg white powder prepared by grinding egg white after drying, and egg white powder prepared by spray drying egg white. Alternatively, commercial egg white powder may be used.

In the mix of the present invention, the amount of egg white powder relative to the total mass of the mix is 0.5 to 30 mass%, preferably 1 to 25 mass%, more preferably 5 to 20 mass%. When an amount of egg white powder in the mix is too small, the coating of the produced fried food easily falls off, and the moisture easily transfers between the food ingredient and the coating material. This results in loss of texture of coating in the fried food after elapse of time after cooking. When an amount of egg white powder in the mix is too large, the coating of the produced fried food may easily fall off or may have a hard texture.

The mix of the present invention may further contain other components as desired in addition to inulin, the oil-and-fat-modified starch, and the egg white powder described above. Examples of other components include, but are not limited to, cereal flours, such as wheat flour and rice flour; starches other than oil-and-fat-modified starches; saccharides other than inulin; egg powder or protein other than egg white powder; gelling agents and thickeners; seasonings, such as common salt and amino acids; spices; flavors; and powdered oils and fats. The mix of the present invention may further contain any one or two or more of these other components in combination according to, for example, the characteristics of desired fried food. The amount of these other components in the mix of the present invention is appropriately adjusted according to, for example, the characteristics of desired fried food. The amount of these other components relative to the total mass of the mix is preferably 59 mass% or less, more preferably 53 mass% or less, still more preferably 40 mass% or less.

The mix of the present invention can be used in the same manner as existing dusting flours for fried food. Typically, the mix of the present invention is directly adhered to the surface of a food ingredient during production of fried food. The procedure for adhering the mix of the present invention to a food ingredient is not limited. Preferably, the food ingredient is sprinkled with the mix such that the mix adheres to the food ingredient. The "sprinkling" operation encompasses any operation in which the mix of the present invention may be directly adhered to the surface of the food ingredient. Specific examples of the "sprinkling" operation include an operation in which the mix is sprinkled over the food ingredient, an operation in which the mix and the food ingredient are placed in a sealable bag and shaken with the opening of the bag closed, and an operation in which the mix is spread on a dish or the like and the food ingredient is rolled on the mix.

Examples of the ingredient include, but are not limited to, various foods including meats, such as chicken, pork, beef, mutton, and goat meat; seafoods, such as squid, prawn, and horse mackerel; and vegetables. To prevent the coating from falling off, the mix of the present invention is preferably used for foods that easily shrink under heating, such as meats and seafoods. As desired, the food ingredient may be seasoned before the mix of the present invention is adhered to the food ingredient.

An intended fried food is made by frying, in accordance with a usual method, a food ingredient having the mix of the present invention adhering thereto. The present invention also provides a method for producing fried food including adhering a coating material to a food ingredient having the mix of the present invention adhering thereto, and then frying the resulting food ingredient. The procedure for producing fried food in the method of the present invention can be carried out in accordance with a usual procedure for producing fried food except that the mix of the present invention is used as a dusting flour. Examples of the coating material used in the method of the present invention include, but are not limited to, a powder coating material (breader) and a liquid coating material (batter). Examples of the breader include, but are not limited to, bread crumbs, Karaage mix, cereal flours, and starch. Examples of the batter include, but are not limited to, egg mixture, a batter for Tempura or breaded fries, and a batter for Karaage.

For example, the production of Tempura in accordance with the method for producing fried food according to the present invention involves directly adhering the mix of the present invention to the surface of a food ingredient and next adhering a batter to the food ingredient having the mix of the present invention adhering thereto, followed by frying. For example, the production of breaded fries in accordance with the method of the present invention involves directly adhering the mix of the present invention to the surface of a food ingredient, next adhering egg mixture or a batter to the food ingredient having the mix of the present invention adhering thereto, and further adhering bread crumbs to the resulting food ingredient, followed by frying. Examples of the frying process in the method for producing fried food of the present invention include, but are not limited to, deep-frying in a large amount of oil and frying with a small amount of oil. Examples

The present invention will be described below in more detail by way of Examples; however, the present invention is not limited to the following Examples.

### Test 1

### (Preparation of Dusting Flour Mix for Fried Food)

Inulin (Fuji FF available from Fuji Nihon Seito Corporation, degree of polymerization of fructose: 5 to 29), oil-and-fat-modified starch (Nisshoku Batter Starch IP (#0) available from Nihon Shokuhin Kako Co. Ltd., 0.2 parts by mass or less of oil and fat content per 100 parts by mass of starch), egg white powder (Sunkirara available from Taiyo Kagaku Co. Ltd.) and wheat flour (soft wheat flour, Flour available from Nisshin Foods Inc.) were mixed at the composition shown in Table 1 below to prepare a dusting flour mix for fried food (Production Example 1, Comparative Examples 1 to 9).

### (Production of Tonkatsu (Japanese Pork Cutlet))

A batter was prepared by mixing 30 mass% of soft wheat flour, 10 mass% of whole egg, and 60 mass% of cold water. The dusting flour mix prepared as described above was uniformly adhered to the entire surface of pork loin (200 g per chop, 1 cm thick). The pork lion having the mix adhering thereto was dipped in the batter, then dredged in bread crumbs, and fried in a vegetable oil heated to 170°C for 4 minutes to produce Tonkatsu. After cooling down, the produced Tonkatsu was stored in a refrigerator for 6 hours and then stored at room temperature (about 25°C) for 1 hour. The Tonkatsu after storage was cut into pieces with a knife, and the adhesion of the coating at that time was evaluated. The texture of the coating during eating of Tonkatsu after storage was also evaluated. The evaluation was carried out by 10 expert panelists on the basis of the following evaluation criteria, and the mean of the scores of the evaluation from 10 expert panelists was calculated.

### Evaluation Criteria

### (Adhesion of Coating)

5 points: Very good; the coating does not fall off at all even when the fried food is cut with the knife.
4 points: Good; most of the coating does not fall off even when the fried food is cut with the knife.
3 points: when the fried food is cut with the knife, the coating falls off in 10% to 20% of a perimeter portion of the cut section of the fried food.
2 points: Poor; when the fried food is cut with the knife, the coating falls off in more than 20% and 50% or less of the perimeter portion of the cut section of the fried food.
1 point: Very poor; when the fried food is cut with the knife, the coating falls off in more than 50% of the perimeter portion of the cut section of the fried food.

### (Texture of Coating)

5 points: Very good; crisp and crunchy
4 points: Good; crisp
3 points: slightly less crisp
2 points: slightly soggy or slightly sticky, and less crisp
1 point: Poor; very soggy or very sticky, and not crisp

The results are shown in Table 1. In Tonkatsu made by using the mix of Production Example 1 containing three components, inulin, the oil-and-fat-modified starch, and egg white powder, the adhesion and texture of the coating were both very good. In Tonkatsu made by using the mixes of Comparative Examples, either or both of the adhesion and texture of the coating were poor. These results show that the use of the dusting flour containing three components, inulin, the oil-and-fat-modified starch, and egg white powder, can produce a fried food whose coating is unlikely to fall off and has a crisp texture even after elapse of time after cooking.

**[Table 1]**

| Composition of Mix (parts by mass) | Production Example 1 | Comparative Example | | | | | | | | |
|---|---|---|---|---|---|---|---|---|---|---|
| | | 1 | 2 | 3 | 4 | 5 | 6 | 7 | 8 | 9 |
| Inulin | 10 | | | | 10 | 10 | | 10 | 30 | 60 |
| Oil-and-fat-modified starch | 60 | | 100 | 60 | 60 | | 60 | | | |
| Egg white powder | 10 | | | | | | 10 | 10 | 30 | |
| Wheat flour | balance | 100 | | balance | balance | balance | balance | balance | balance | balance |
| Total | 100 | 100 | 100 | 100 | 100 | 100 | 100 | 100 | 100 | 100 |
| Adhesion of coating | 4.6 | 2.5 | 4.4 | 4.1 | 4.1 | 2.4 | 4.2 | 2.2 | 2.0 | 1.8 |
| Texture of coating | 4.5 | 2.5 | 2.1 | 2.4 | 3.1 | 3.2 | 2.9 | 3.7 | 3.9 | 3.0 |

### Test 2

Tonkatsu was produced by the same procedure as in Test 1 except that the composition of the dusting flour mix was changed as described in Tables 2 to 4, and the adhesion and texture of the coating were evaluated. The results are shown in Tables 2 to 4. In Tables 2 to 4, the result of Production Example 1 is shown again.

**[Table 2]**

| Composition of Mix (parts by mass) | Production Example | | | | | | | | |
|---|---|---|---|---|---|---|---|---|---|
| | 2* | 3 | 4 | 5 | 1 | 6 | 7 | 8 | 9* |
| Inulin | 0.3 | 0.5 | 1 | 5 | 10 | 20 | 25 | 30 | 35 |
| Oil-and-fat-modified starch | 60 | 60 | 60 | 60 | 60 | 60 | 60 | 60 | 60 |
| Egg white powder | 10 | 10 | 10 | 10 | 10 | 10 | 10 | 10 | 5 |
| Wheat flour | balance | balance | balance | balance | balance | balance | balance | | |
| Total | 100 | 100 | 100 | 100 | 100 | 100 | 100 | 100 | 100 |
| Adhesion of coating | 4.4 | 4.4 | 4.5 | 4.6 | 4.6 | 4.4 | 4.3 | 4.1 | 3.7 |
| Texture of coating | 3.7 | 4.2 | 4.4 | 4.5 | 4.5 | 4.4 | 4.3 | 4.1 | 3.6 |

| | | | | | | | | | |
|---|---|---|---|---|---|---|---|---|---|
| *Reference | | | | | | | | | |

**[Table 3]**

| Composition of Mix (parts by mass) | Production Example | | | | | | | | |
|---|---|---|---|---|---|---|---|---|---|
| | 10* | 11 | 12 | 13 | 1 | 14 | 15 | 16 | 17 |
| Inulin | 10 | 10 | 10 | 10 | 10 | 5 | 2.5 | 1.5 | 1 |
| Oil-and-fat-modified starch | 35 | 40 | 45 | 50 | 60 | 90 | 95 | 97 | 98 |
| Egg white powder | 10 | 10 | 10 | 10 | 10 | 5 | 2.5 | 1.5 | 1 |
| Wheat flour | balance | balance | balance | balance | balance | | | | |
| Total | 100 | 100 | 100 | 100 | 100 | 100 | 100 | 100 | 100 |
| Adhesion of coating | 3.4 | 4.3 | 4.5 | 4.6 | 4.6 | 4.7 | 4.7 | 4.7 | 4.7 |
| Texture of coating | 4.2 | 4.3 | 4.4 | 4.5 | 4.5 | 4.4 | 4.3 | 4.1 | 3.7 |

| | | | | | | | | | |
|---|---|---|---|---|---|---|---|---|---|
| *Reference | | | | | | | | | |

**[Table 4]**

| Composition of Mix (parts by mass) | Production Example | | | | | | | | |
|---|---|---|---|---|---|---|---|---|---|
| | 18* | 19 | 20 | 21 | 1 | 22 | 23 | 24 | 25* |
| Inulin | 10 | 10 | 10 | 10 | 10 | 10 | 10 | 10 | 5 |
| Oil-and-fat-modified starch | 60 | 60 | 60 | 60 | 60 | 60 | 60 | 60 | 60 |
| Egg white powder | 0.3 | 0.5 | 1 | 5 | 10 | 20 | 25 | 30 | 35 |
| Wheat flour | balance | balance | balance | balance | balance | balance | balance | | |
| Total | 100 | 100 | 100 | 100 | 100 | 100 | 100 | 100 | 100 |
| Adhesion of coating | 3.9 | 4.2 | 4.4 | 4.6 | 4.6 | 4.5 | 4.3 | 4.2 | 4.0 |
| Texture of coating | 3.6 | 4.1 | 4.4 | 4.6 | 4.5 | 4.4 | 4.3 | 4.1 | 3.6 |

| | | | | | | | | | |
|---|---|---|---|---|---|---|---|---|---|
| *Reference | | | | | | | | | |

## Claims

1. A dusting flour mix for fried food, the dusting flour mix comprising inulin, an oil-and-fat-modified starch, and egg white powder, wherein an amount of inulin is from 0.5 to 30 mass%, wherein an amount of the oil-and-fat-modified starch is from 40 to 98 mass%, and wherein an amount of the egg white powder is from 0.5 to 30 mass%.

2. A method for producing fried food, the method comprising adhering a coating material to a food ingredient having the dusting flour mix for fried food according to claim 1 adhering thereto, and then frying the resulting food ingredient.

3. Use of a dusting flour mix as defined in claim 1 as a dusting flour for fried food.

## Patentansprüche

1. Mehlmischung zum Bestäuben zu frittierender Speisen, bestehend aus Inulin, öl- bzw. fettmodifizierter Stärke und Eiweißpulver, wobei der Inulinanteil 0,5 bis 30 Massen-%, der Anteil der öl- bzw. fettmodifizierter Stärke 40 bis 98 Massen-% und der Anteil des Eiweißpulvers 0,5 bis 30 Massen-% beträgt.

2. Verfahren zur Herstellung frittierter Speisen, umfassend das Aufbringen eines Beschichtungsmaterials auf eine Lebensmittelzutat, an der die Mehlmischung zum Bestäuben zu frittiertender Speisen gemäß Anspruch 1 haftet, und anschließendes Frittieren der resultierenden Lebensmittelzutat.

3. Verwendung einer Mehlmischung zum Bestäuben frittierter Speisen gemäß Anspruch 1 als Mehl zum Bestäuben frittierter Speisen.

## Revendications

1. Mélange de farine à fleurer pour aliments frits, le mélange de farine à fleurer comprenant de l'inuline, un amidon modifié par l'huile et la graisse et de la poudre de blanc d'œuf, dans lequel une quantité d'inuline est de 0,5 à 30 % en masse, dans lequel une quantité de l'amidon modifié par l'huile et la graisse est de 40 à 98 % en masse, et dans lequel une quantité de la poudre de blanc d'œuf est de 0,5 à 30 % en masse.

2. Procédé de production d'aliments frits, le procédé comprenant de faire adhérer un matériau d'enrobage à un ingrédient alimentaire sur lequel le mélange de farine à fleurer pour aliments frits selon la revendication 1 adhère, puis de frire l'ingrédient alimentaire résultant.

3. Utilisation d'un mélange de farine à fleurer tel que défini dans la revendication 1 comme farine à fleurer pour aliments frits.
